# EUROPEAN PATENT SPECIFICATION

(11) **EP 2 381 016 B1**
(45) Date of publication and mention of the grant of the patent: **28.09.2016**
(21) Application number: 09833105.1
(22) Date of filing: 14.10.2009
(51) Int. Cl.: B32B 15/08, C25D 5/50, C25D 5/36, C25D 3/32

(54) **SURFACE-TREATED STEEL SHEET ON WHICH PARTICULATE TIN IS DEPOSITED AND RESIN-COATED STEEL SHEET**
OBERFLÄCHENBEHANDELTES STAHLBLECH MIT DARAUF ABGESCHIEDENEM TEILCHENFÖRMIGEM ZINN UND HARZBESCHICHTETES STAHLBLECH
FEUILLE D'ACIER TRAITÉE EN SURFACE SUR LAQUELLE DES PARTICULES D'ÉTAIN SONT DÉPOSÉES ET FEUILLE D'ACIER RECOUVERTE DE RÉSINE

(30) Priority: 19.12.2008 JP 2008324309
(43) Date of publication of application: 26.10.2011
(73) Proprietor: Toyo Kohan Co., Ltd., Tokyo 102-8447 (JP)
(72) Inventor: MATSUBARA, Masanobu, Kudamatsu-shi Yamaguchi 744-8611 (JP)
(74) Representative: Vossius & Partner Patentanwälte Rechtsanwälte mbB
(86) International application number: PCT/JP2009/005369
(87) International publication number: WO 2010/070795

(56) References cited:
- DE-A1- 4 022 361
- JP-A- 10 330 990
- JP-A- 10 330 990
- JP-A- 11 092 989
- JP-A- 11 131 285
- JP-A- 11 131 285
- JP-A- H04 128 386
- JP-A- H11 193 490
- JP-A- 2000 273 686
- JP-A- 2000 273 686

## Description

### FIELD OF THE INVENTION

The present invention relates to a surface-treated steel sheet for a resin-coated steel sheet exhibiting excellent working adhesive properties, and a resin-coated steel sheet that is coated with resin on the surface-treated steel sheet.

### BACKGROUND OF THE INVENTION

Recently, cans are manufactured by subjecting a resin-coated steel sheet to any severe forming process of drawing, drawing followed by further stretching, drawing followed by further ironing, and drawing followed by a combination of stretching and ironing in order to acquire a can body, which is integrally formed with a bottom end, then necked and tightened to a top board. For those cans, excellent adhesiveness to the steel sheet is required for the resin in order not to have the resin coating separated or broke during a severe forming process or after a severe forming process. Therefore, as a material for those can bodies, resin-coated chromate-treated steel sheet has been used where organic resin was coated on a chromate-treated steel sheet on the surface of which chromate coating is composed that has excellent process adhesiveness such as tin free steel.

However, the can body that is made of the resin-coated chromate-treated steel sheet has a problem that corrosion of the steel sheet is accelerated drastically in case small holes or cracks on the resin layer that might penetrate into the surface of steel sheet occur, because the chromate-treated steel sheet has poor corrosion resistance, especially in filling with highly acidic contents.

Therefore, a resin-coated tin plated steel sheet that is comprised of a tin plated steel sheet being coated with resin with excellent corrosion resistance even when a can is filled with highly acidic contents was attempted to apply. Yet, since the resin's adhesiveness to the tin plated layer, especially working adhesive properties of the film during forming process of can bodies is poor, the development of materials that exhibit excellent working adhesive properties of film even for the usage for the severe forming process above mentioned was highly demanded. Especially, because of its tin oxidized coating and its low temperature of coating, tinplate had a problem of poorer film adhesiveness than TFS.

Generally, plated steel sheet used for beverage cans is mainly tinplate (tin plated steel sheet) and TFS (electrolytic chrome plated steel sheet). Tinplate has more excellent corrosion resistance than TFS against filling the contents that has high corrosive properties, since tinplate can utilize tin's sacrificial protection action. After cans are formed, the film adhesiveness of tinplate is inferior to that of TFS because the tin oxidized coating (that inhibits adhesiveness to the organic resin film) is existent and because it is difficult to film at the higher temperature than tin's melting point (232°C) (as it melts, tin gains fluidity and adheres to the heating system), it is difficult for tinplate to be filmed at the higher temperature than tin's melting point.

On the other hand, while TFS has less excellence in corrosion resistance than tinplate, its film adhesiveness after cans are formed is superior to that of tinplate because there is a chrome oxidized coating that has excellent film adhesiveness on the surface layer and it is possible to be filmed at the higher temperature than 232°C. (The melting point of chrome is about 1800°C.)

In order to solve the problems mentioned above, in Patent Reference 1, a resin-coated tin plated steel sheet is described, which is acquired by providing a layer applied with silane coupling agents on the tin plated layer of a no-reflow tin plated steel sheet (a tin plated steel sheet without tin fusing treatment) or a reflow tin plated steel sheet (a tin plated steel sheet with tin fusing treatment) and furthermore by laminating an organic resin film.

Patent Reference1: Patent Application Publication No. P2002-285354A

### DISCLOSURE OF THE INVENTION

### Problems to be resolved by the invention

However, because the treatment for the resin-coated tin plated steel sheet in Patent Reference 1 is a newly additional treatment, the cost of manufacturing tinplate would increase. Also separation of resin at the top part of can body sometimes causes during the forming process if a can body is formed and processed by drawing followed by a further combination of stretching and ironing. Thus there was a problem of working adhesive properties of resin during the process of can body forming.

It's an object of the present invention to solve the problems mentioned above and to provide a resin-coated steel sheet that exhibits excellent working adhesive properties of resin during a severe forming process.

And also, another object of the present invention is to provide a surface-treated steel sheet on which particulate tin is deposited as a substrate for a resin-coated steel sheet. Furthermore, another object of the present invention is to provide the manufacturing method of the surface-treated steel sheet.

### Means of solving the problems

(1) The surface-treated steel sheet on which tin is deposited in the form of particles in the present invention, is a surface-treated steel sheet on which tin is discontinuously deposited in the form of particles and iron of the steel sheet surface is partially exposed,
   characterized in that an area ratio of the tin on the steel sheet surface is 5-95%, an amount of the tin is 0.1- 13 g/m², and an average particle size of the particulate metal tin is 0.5-50µm. , wherein a resin layer is to be laminated on the surface-treated steel sheet.
(2) The method of manufacturing the surface-treated steel sheet on which tin is deposited in the form of particles in the present invention is a method of manufacturing the surface-treated steel sheet of (1), on which tin is deposited in the form of particles, characterized in that depositing particulate metal tin by using tin sulfate plating bath.
(3) In the method of manufacturing the surface-treated steel sheet in said (2), it is preferable to conduct tin melting treatment after the depositing of the particulate metal tin.
(4) The resin-coated steel sheet in the present invention is characterized in that a resin layer is laminated on the surface-treated steel sheet of (1), so that the exposed iron adheres to the resin layer.

### Effect of the invention

In the resin-coated steel sheet in the present invention, tin plating is provided so as that it can let-particulate metal tin deposited on the steel sheet and that a resin layer is founded on top of that. Therefore a resin-coated steel sheet that exhibits more excellent working adhesive properties than previous can be provided.

Also, since tin is in the form of particles, the resin layer adheres to the steel surface that has excellent adhesiveness, and at the same time, because of the anchor effect of the irregularity of the surface, the adhesiveness to the resin layer increases dramatically than the tin plated steel sheet with the conventional flat surface.

Furthermore, the surface-treated steel sheet on the surface of which tin is deposited as particles can be filmed at the higher temperature than tin's melting point (232°C), the adhesiveness of the resin layer after the can forming process performs almost the same level of TFS. That is to say, since the conventional tin plated steel sheet has crystal grains of tin on its surface, if it is coated at the higher temperature than tin's melting point, tin that is melted during tin melting treatment gains fluidity and the outlook becomes uneven. And at the same time, since while being coated, a harmful effect that tin adheres to the heating system occurs, it is difficult to be coated at the higher temperature than tin' s melting point. However, respecting the particulate tin on the surface-treated steel sheet in the present invention, melted tin particles do not bond together and do not gain fluidity if it is heated to the higher temperature than tin's melting point, it is possible to be coated at the higher temperature than tin's melting point. Furthermore, in the method of manufacturing the surface-treat steel sheet on the surface of which tin is deposited as particles in the present invention, tin sulfate plating bath can be used. This bath is not conventional PSA (phenol sulfonic acid) that is composed of ferrostan tin plating bath. Since inexpensive sulfuric acid is used, it leads to the cost down of the plating bath and the decrease of COD.

### Best Mode for Carrying Out the Invention

In the following, the embodiments of the present invention are described in detail.

### [Steel sheet]

As material plates (steel sheets) for the surface-treated steel sheet in the present invention, cold rolled steel sheet that is normally used for producing can is used depending on its applications. Such as cold rolled steel sheet with its thickness of 0.15- 0.3 mm can be used, which is provided by low carbon aluminum killed hot rolled steel annealed and then treated with temper rolling. Further, cold rolled steel sheet that is, after annealed, increased its strength by subjecting to furtherer cold rolling is used. Furthermore, cold rolled steel sheet that is produced of non-aging ultra low carbon steel added with niobium and titanium can also be applied. These cold rolled steel sheets are, after being treated with electrolytic cleaning and pickling, formed a tin plated layer on the steel sheet to acquire a surface-treated steel sheet.

### [Plating bath]

For the surface-treated steel sheet in the present invention, tin sulfate plating bath can be used.

As for the compositions of the tin sulfate plating bath:
Concentration of sulfuric acid: 10- 100g/L
Concentration of tin sulfate: 10- 200g/L
Additive agent (interfacial active agent) : 10- 200cc/L. As for the interfacial active agents, alphatic type can be preferably used such as "technistane additive" (produced by Tecnic, JPKK).

### Additives (antioxidant): 1- 200 cc/L

As antioxidant, hydroxyquinone or dihydroxynaphthalene and so forth among hydroquinone series can be preferably used. For instance, "technistane antioxidant" (produced by Tecnic, JPKK) can be exemplified.

For the plating conditions, plating electrical current density: 2- 30 A/dm², amount of electricity: 5- 100 C/dm², plating bath temperature: 20- 60°C are desirable.

### [Tin area ratio of the surface]

Tin area ratio of the surface, which is the area that the particulate metal tin dispersed and deposited on the steel sheet surface, is 5- 95%. Preferably it is 20-80%. If the tin area ratio of the surface is less than 5%, corrosion resistance and workability drastically deteriorate. Therefore the tin area ratio should be 5% or more.

If the tin area ratio of the surface is larger than 95%, the area of iron exposed on the surface becomes smaller and it would not contribute to the improvement of the adhesiveness of the resin layer. In order to improve the adhesiveness of the resin layer, 5% or more of iron-exposed area on the surface would be necessary.

The tin area ratio of the surface on the steel sheet surface can be acquired as follows: Obtaining the first image that is observed with an electronic microscope on the surface; Obtaining the second image that is observed again with an electronic microscope picture after chemically removing of the particulate tin existing dispersed on the steel sheet surface and; Comparing those two images by computer image processing.

### [Amount of tin-plating of the particulate metal tin]

It is necessary to be 0.1- 13g/m² of the amount of tin-plating of the particulate metal tin on the steel sheet surface in order to expose iron on the surface in the 5% or more. Preferably it is 0.5- 5.6g/m². If the amount of tin plating is less than 0.1g/ m², it is not preferable as corrosion resistance becomes deteriorated.

Especially, if tin melting (re-flow) treatment is conducted, all of the tin plated becomes Fe-Sn alloyed and not only corrosion resistance but also workability becomes deteriorated. Therefore, at least 0.1g/m² of tin-plating amount is necessary. On the other hand, if it is more than 13g/ m², iron would not be exposed on the surface and it would not contribute to the improvement of the adhesiveness to the resin layer.

### [Particulate tin]

The reason why the tin plated on the steel sheet turns into the form of particles has not yet discovered very much. When a small amount of tin plating is conducted on the iron surface where an oxidized coating is composed, it is thought to be difficult to compose a tin plated layer with equal thickness as the wettability of tin is different depending on the area of iron oxidized coating.

And also, the average particle size of the particulate metal tin (the average radius of the particle radius seen from the flat surface) is 0.5- 50µm. Preferably it is 2- 20µm. If it is less than 0.5µm, the particle size is too small and the anchor effect of the irregular resin layer could not be expected enough, and it would not contribute to the improvement of the adhesiveness of the resin layer. On the other hand, if the average particle size is larger than 50µm, it would become difficult for tin to be electrocoated by the cause of the constraint of electrolytic treatment.

### [Tin melting treatment]

After forming the particulate metal tin mentioned above, tin melting treatment can be conducted by heating the surface-treat steel sheet at the higher temperature than tin's melting point. The tin melting treatment ensures excellent corrosion resistance with a small amount of tin plating that is plated uniformly. Therefore the tin melting treatment is intended to expand the ratio of the area of the particulate metal tin on the surface-treated steel sheet, and to compose an alloy layer comprised of mainly elaborated iron-tin alloys. For tin melting treatment, such methods can be applied as resistance heating method or introduction heating method by itself or by a combination of those, which are normally used for manufacturing tinplate.

### [Laminating a resin layer]

The resin-coated surface-treated steel sheet in the present invention can be acquired by founding a resin film as a resin layer on either one side or both sides of the surface-treated steel sheet that was provided by the way mentioned above. As a resin layer, thermoplastic resin that has excellent workability even after heated are preferably used. For instance, polyester resin such as polyethylene terephthalate, polybutylene terephthalate, polyethylene naphthalate, ethylene terephthalate - ethylene isophthalate copolymer, butylene terephthalate - butylene isophthalate copolymer, or blended resins of more than two kinds of those polyester resins; polyolefin resin such as polyethylene, polypropylene, ethylene - propylene copolymer, and those modified by maleic acid, ethylene - vinyl acetate copolymer and ethylene - acrylic acid copolymer; polyamide resin such as 6- nylon, 6, 6 - nylon, 6, 10 - nylon; poly carbonate; polymethylpentene; monolayer that is comprised of the blends of the above polyester resin and ionomer; multilayer that are comprised of more than two kinds of the above mentioned resins; are used.

A thickness of the resin layer is preferably 10- 100µm from the perspectives of convenience to laminate the resin layer, of the adhesiveness strength of the resin layer to the surface-treated steel sheet, of corrosion resistance and of the economic condition for the formed body (such as cans) after the forming process of the resin-coated surface-treated steel sheet.

The resin layer is formed as follows : the resin pellet is heated and melted, then it is extruded by T-die of an extruder to form a film having a desired thickness. Then the film is laminated onto the surface-treated steel sheet on which the particulate metal tin is deposited.

As a method of laminating the resin layer, for instance, a heat bonding method is used. That is, a resin film is abutted to the surface-treated steel sheet that is heated at the range of the designated temperatures and laminated by sandwiching and pressing by the both sides with a couple of pressure roller. According to the method of manufacturing in the present invention, even a biaxial orientated resin film formed by giving a stretching process to resin film could be used by a heat bonding method at the higher temperature than tin's melting point (for example at 250°C).

### Embodiment

In the following, the present invention will be explained in detail by using Examples 1- 64 and Comparative Examples 1- 23.

### [Forming the surface-treated steel sheet]

Low carbon cold rolled steel sheet showed in columns of "thickness of sheet" in Table 1 are conducted with electrolytic cleaning - water cleaning in alkaline aqueous solution, and with sulfuric acid pickling - water cleaning. Then, particulate metal tin is formed by tin sulfate bath under the tin-plating conditions showed in the following and the conditions showed in Tables 1-4. Further, some of steel sheets are conducted with the tin melting treatment, and others are not.

After that, surface-treat steel sheets as a substrate for laminating resin was heated into three groups, 200°C, 220°C, and 250°C to laminate a resin layer on the particulate metal tin.
<Tin-plating conditions>
Composition of tin sulfate plating
Concentration of sulfuric acid: 52g/L (20cc/L)
Concentration of tin sulfate: 90g/L (50g/L as Sn)
Additive agent for tin sulfate plating
(Interfacial active agent): 50cc/L
("Technistane additive" produced by Tecnic JPKK)
Additive agent for tin sulfate plating (Antioxidant): 20 cc/L
("Technistane antioxidant" produced by Tecnic JPKK)

On the other hand, for Comparative Examples, as conditions of tin plating, the normal tinplating bath composition (Ferrostan bath) is used.
Concentration of PSA (phenol sulphonic acid): 60g/L
Concentration of tin sulfate: 54g/L (30g/L as Sn)
Additive agent A (ethoxy-α-naphthol): 3g/L
Additive agent B (ethoxynaphthol sulphonic acid): 3g/L
[Table 1]

**Table 1: Description of samples (Sn=1.4, 2.8g/m²; Laminate temperature: 200°C)**

| | | tin plating amount | plating current density | ratio of the area of the surface | average size of tin particles | tin melting treatment (reflow) | laminate temperature | note |
|---|---|---|---|---|---|---|---|---|
| | | (g/m²) | (A/dm²) | tin (%) | (µm) | | | |
| Example 1 | particulate tin | 1.4 | 2 | 5 | 8 | none | 200°C | |
| 2 | | | 5 | 50 | 4 | | | |
| 3 | | | 15 | 80 | 2 | | | |
| 4 | | | 30 | 97 | 0.3 | | | |
| 5 | | 2.8 | 1 | 5 | 10 | | | |
| 6 | | | 3 | 50 | 5 | | | |
| 7 | | | 10 | 80 | 3 | | | |
| 8 | | | 20 | 97 | 0.5 | | | |
| 9 | | 1.4 | 2 | 5 | 8 | yes | | |
| 10 | | | 5 | 50 | 4 | | | |
| 11 | | | 15 | 80 | 2 | | | |
| 12 | | | 30 | 97 | 0.3 | | | |
| 13 | | 2.8 | 1 | 5 | 10 | | | |
| 14 | | | 3 | 50 | 5 | | | |
| 15 | | | 10 | 80 | 3 | | | |
| 16 | | | 20 | 97 | 0.5 | | | |
| Comp.Ex.1 | normal tinplate | 1.4 | 10 | 100 | 0.2 | none | | |
| 2 | | | | | 0.3 | yes | | |
| 3 | | 2.8 | | 100 | 0.2 | none | | |
| 4 | | | | | 0.3 | yes | | |
| 5 | TFS | | 50 | - | - | none | | |
| 6 | tinplate raw sheet | | - | - | - | | | |

[Table 2]

**Table 2: Description of samples (Sn=1.4, 2.8g/m²; Laminate temperature: 220°C)**

| | | | | | | | | |
|---|---|---|---|---|---|---|---|---|
| | | tin plating amount | plating current density | ratio of the area of the surface tin (%) | average size of tin particles | tin melting treatment (reflow) | laminate temperature | Note |
| | | (g/m²) | (A/dm²) | | (µm) | | | |
| Example 17 | particulate tin | 1.4 | 2 | 5 | 8 | none | 220°C | |
| 18 | | | 5 | 50 | 4 | | | |
| 19 | | | 15 | 80 | 2 | | | |
| 20 | | | 30 | 97 | 0.3 | | | |
| 21 | | 2.8 | 1 | 5 | 10 | | | |
| 22 | | | 3 | + | 5 | | | Example 22 |
| 23 | | | 10 | 80 | 3 | | | |
| 24 | | | 20 | 97 | 0.5 | | | |
| 25 | | 1.4 | 2 | 5 | 8 | yes | | |
| 26 | | | 5 | 50 | 4 | | | |
| 27 | | | 15 | 80 | 2 | | | |
| 28 | | | 30 | 97 | 0.3 | | | |
| 29 | | 2.8 | 1 | 5 | 10 | | | |
| 30 | | | 3 | 50 | 5 | | | |
| 31 | | | 10 | 80 | 3 | | | |
| 32 | | | 20 | 97 | 0.5 | | | |
| Comp.Ex.7 | normal tinplate | 1.4 | 10 | 100 | 0.2 | none | | |
| 8 | | | | | 0.2 | yes | | |
| 9 | | 2.8 | | 100 | 0.3 | none | | Comp. Ex.9 |
| 10 | | | | | 0.3+ | yes | | |
| 11 | TFS | | 50 | - | - | none | | |
| 12 | tinplate raw sheet | | - | - | - | | | |

[Table 3]

**Table 3: Description of samples (Sn=1.4, 2.8g/m²; Laminate temperature: 250°C)**

| | | tin plating amount (g/m²) | plating current density (A/dm² | ratio of the area of the surface tin (%) | average size of tin particles (µm) | tin fusing treatment (reflow) | laminate temperature | note |
|---|---|---|---|---|---|---|---|---|
| Example 33 | island tinplating | 1.4 | 2 | 5 | 8 | none | 250°C | |
| 34 | | | 5 | 50 | 4 | | | |
| 35 | | | 15 | 80 | 2 | | | |
| 36 | | | 30 | 97 | 0.3 | | | |
| 37 | | 2.8 | 1 | 5 | 10 | | | |
| 38 | | | 3 | 50 | 5 | | | Example 38 |
| 39 | | | 10 | 80 | 3 | | | |
| 40 | | | 20 | 97 | 0.5 | | | |
| 41 | | 1.4 | 2 | 5 | 8 | yes | | |
| 42 | | | 5 | 50 | 4 | | | |
| 43 | | | 15 | 80 | 2 | | | |
| 44 | | | 30 | 97 | 0.3 | | | |
| 45 | | 2.8 | 1 | 5 | 10 | | | |
| 46 | | | 3 | 50 | 5 | | | |
| 47 | | | 10 | 80 | 3 | | | |
| 48 | | | 20 | 97 | 0.5 | | | |
| Comp.Ex.13 | normal | 1.4 | 10 | 100 | 0.2 | none | | |
| 14 | tinplate | | | | 0.2 | yes | | |
| 15 | | 2.8 | | 100 | 0.3 | none | | Comp.Ex.15 |
| 16 | | | | | 0.3 | yes | | |
| 17 | TFS | | 50 | - | - | no+ne | | |
| 18 | tinplate raw sheet | | - | - | - | | | |

[Table 4]

**Table 4: Description of samples (Sn=0.5, 13g/m²; Laminate temperature: 220°C)**

| | | tin plating amount | plating current density | ratio of the area of the surface | average size of tin particles | tin fusing treatment (reflow) | laminate temperature | note |
|---|---|---|---|---|---|---|---|---|
| | | (g/m²) | (A/dm²) | tin (%) | (µm) | | | |
| Example 49 | island tinplating | 0.5 | 5 | 5 | 4 | none | 220°C | |
| 50 | | | 10 | 50 | 2 | | | |
| 51 | | | 30 | 80 | 1 | | | |
| 52 | | | 50 | 97 | 0.2 | | | |
| 53 | | 13 | 0.2 | 5 | 50 | | | |
| 54 | | | 1 | 50 | 20 | | | |
| 55 | | | 3 | 80 | 10 | | | |
| 56 | | | 6 | 97 | 2 | | | |
| 57 | | 0.5 | 5 | 5 | 4 | yes | | |
| 58 | | | 10 | 50 | 2 | | | |
| 59 | | | 30 | 80 | 1 | | | |
| 60 | | | 50 | 97 | 0.2 | | | |
| 61 | | 13 | 0.2 | 5 | 50 | | | |
| 62 | | | 1 | 50 | 20 | | | |
| 63 | | | 3 | 80 | 10 | | | |
| 64 | | | 6 | 97 | 2 | | | |
| Comp.Ex.19 | normal tinplate | 0.5 | 10 | 100 | 0.1 | none | | |
| 20 | | | | | 0.1 | yes | | |
| 21 | | 13 | | 100 | 0.4 | none | | |
| 22 | | | | | 0.4 | yes | | |
| 23 | TFS | | 50 | - | - | none | | |
| 24 | tinplate raw sheet | | - | - | - | | | |

### [Surface observation]

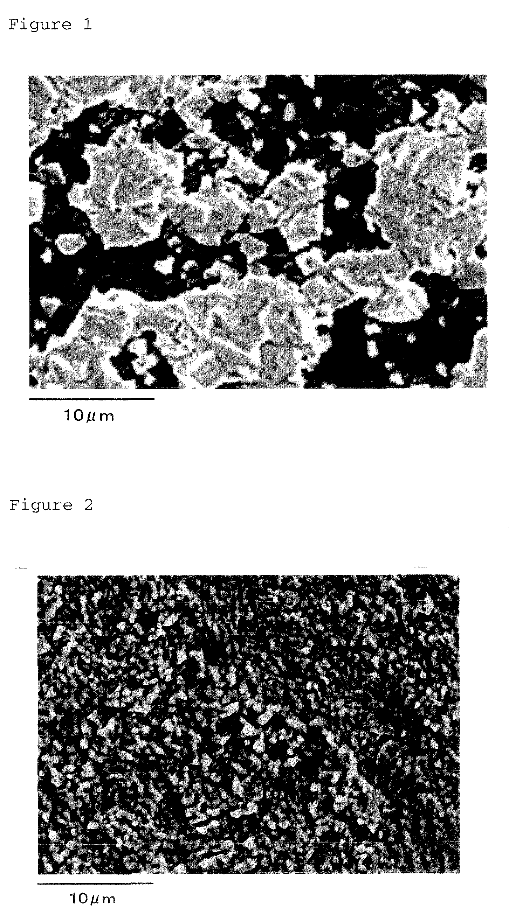

Figure 1 is a photograph of surface observation (SEM image) of the surface-treated steel sheet on which the particulate metal tin is deposited in the present invention. Figure 2 is a photograph of surface observation of the normal tinplate. The amount of tin plating is 2.8g/m² for both.

As Figure 1 shows, the particulate metal tin with the average particle radius of 10µm is discontinuously dispersed and deposited in the form of particles on the steel sheet where iron base is partially exposed.

On the other hand, in the normal tinplate, the small metal tin particles are deposited evenly all over the steel sheet surface and iron base is not exposed.

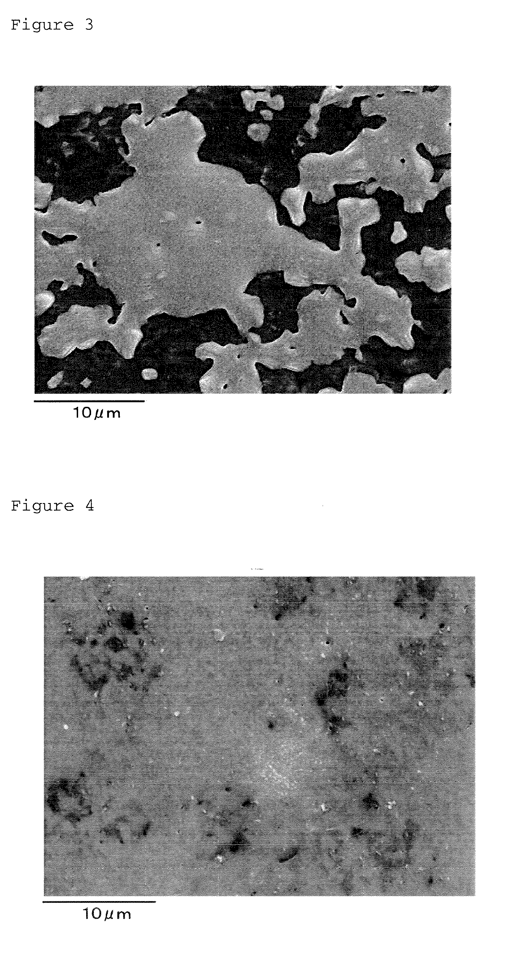

Furthermore, Figure 3 is a photograph of surface observation (SEM image) of the surface-treated steel sheet in which the surface-treated steel sheet of Figure 1 is heated at higher than 232°C and then the melting treatment of tin plating is conducted.

Figure 4 is a photograph of surface observation after the melting treatment of the normal tinplate.

As Figure 3 shows, the particulate metal tin expands its area by the conducting of the melting treatment. Meanwhile, metal tin is not existent on the oxidized iron base and part of the iron base is exposed. Thus, the particulate metal tin is discontinuously dispersed in the form of particles on the steel sheet surface.

### [Forming the resin-coated steel sheet]

Next, a resin-coated steel sheet is formed as follows: a transparent non-oriented film having the thickness of 28µm that is comprised of ethylene terephthalate - ethylene isophthalate copolymer (PET I) is laminated on one side surface of the surface-treated steel sheet mentioned above (the surface that is supposed to be the inner surface of the can) ; a white non-oriented film having the thickness of 16µm that is comprised of ethylene terephthalate - ethylene isophthalate copolymer (PET I) including 20 weight % of titanium white pigment is laminated on the other side surface (the surface that is supposed to be the outer surface of the can) under the laminate temperature conditions shown in Tables 1- 4; after laminating the resin film, it is immediately cooled.

### [Manufacturing 1st cup]

The resin-coated steel sheets of Examples 1- 64 and Comparative Examples 1- 23 shown in Tables 1- 4 are punched into blanks with the diameter of 151mm. Then 1st cup, B/M can and CHS can are formed by first step drawing process under the drawing ratio of 1.64 in such a way that the surface coated with the transparent non-oriented film is the inner surface side of the cup (that is, the other surface coated with the white non-oriented film is the outer side of the cap). Test pieces, of which the surface coated with the transparent non-oriented film is the surface for measurement, are manufactured for evaluation of the adhesiveness.

These test pieces are placed into a tensile tester, and measured S peel strength.

Furthermore, it is observed if there is any cup edge delamination (separation of the film) seen in the 1st cup, B/M can and CHS can.

Furtherer, for the resin-coated surface-treated steel sheet itself (described as flat sheet in the Tables), S peel strength is also measured and the appearance after the lamination is visually observation.

Here, "1st cup" is defined that is manufactured by drawing a sheet. "B/M can" is defined that is manufactured by furtherer drawing the 1st cup, and then ironing to form into a can that has a small can radius and has a high side wall. "CHS can" is defined that is manufactured by trimming, flanging and necking treatment to the B/M can.

The results for evaluations above are shown in Tables 5 - 8.
[Table 5]

**Table 5: Results for evaluation of adhesiveness (Sn= 1.4, 2.8g/m²; Laminate temperature: 200°C)**

| | appearance after lamination | results for evaluation of adhesiveness | | | | | | | note |
|---|---|---|---|---|---|---|---|---|---|
| | | flat substrate (lamination plate) | 1^{st} cup | | B/M can | | CHS can | | |
| | | S peel strength | delamination | S peel strength | delamination | S peel strength | delamination | S peel strength | |
| Ex.1 | ○ | 1.7 | ○ | 0.8 | ○ | 1.1 | ○ | 1.9 | |
| 2 | ○ | 1.7 | ○ | 0.7 | ○ | 1.1 | ○ | 1.9 | |
| 3 | ○ | 1.7 | ○ | 0.5 | ○ | 1.1 | ○ | 1.9 | |
| 4 | ○ | 1.7 | ○ | 0.2 | ○ | 1.1 | ○ | 1.9 | |
| 5 | ○ | 1.5 | ○ | 0.8 | ○ | 1 | ○ | 1.8 | |
| 6 | ○ | 1.5 | ○ | 0.7 | ○ | 1 | ○ | 1.8 | |
| 7 | ○ | 1.5 | ○ | 0.5 | ○ | 1 | ○ | 1.8 | |
| 8 | ○ | 1.5 | ○ | 0.2 | ○ | 1 | ○ | 1.8 | |
| 9 | ○ | 1.7 | ○ | 0.8 | ○ | 1.1 | ○ | 1.9 | |
| 10 | ○ | 1.7 | ○ | 0.7 | ○ | 1.1 | ○ | 1.9 | |
| 11 | ○ | 1.7 | ○ | 0.5 | ○ | 1.1 | ○ | 1.9 | |
| 12 | ○ | 1.7 | ○ | 0.2 | ○ | 1.1 | ○ | 1.9 | |
| 13 | ○ | 1.5 | ○ | 0.8 | ○ | 1 | ○ | 1.8 | |
| 14 | ○ | 1.5 | ○ | 0.7 | ○ | 1 | ○ | 1.8 | |
| 15 | ○ | 1.5 | ○ | 0.5 | ○ | 1 | ○ | 1.8 | |
| 16 | ○ | 1.5 | ○ | 0.2 | ○ | 1 | ○ | 1.8 | |
| C.Ex. 1 | ○ | 1.6 | Δ | 0.05 | ○ | 1 | Δ | 1.8 | |
| 2 | ○ | 1.6 | Δ | 0.03 | ○ | 1 | Δ | 1.8 | |
| 3 | ○ | 1.4 | × | 0.02 | ○ | 0.9 | × | 1.5 | |
| 4 | ○ | 1.4 | × | 0.02 | ○ | 0.9 | × | 1.5 | |
| 5 | ○ | 1.9 | ○ | 0.9 | ○ | 1.2 | ○ | 2 | |
| 6 | ○ | 1.9 | ○ | 0.8 | ○ | 1.2 | ○ | 2 | |

[Table 6]

**Table 6: Results for evaluation of adhesiveness (Sn= 1.4, 2.8g/m²; Laminate temperature: 220°C)**

| | appearance after lamination | results for evaluation of adhesiveness | | | | | | | note |
|---|---|---|---|---|---|---|---|---|---|
| | | flat substrate (lamination plate) S peel strength | 1^{st} cup | | B/M can | | CHS can | | |
| | | | delamination | S peel strength | delamination | S peel strength | delamination | S peel strength | |
| Ex. 17 | ○ | 1.9 | ○ | 0.9 | ○ | 1.2 | ○ | 1.9 | |
| 18 | ○ | 1.9 | ○ | 0.8 | ○ | 1.2 | ○ | 1.9 | |
| 19 | ○ | 1.9 | ○ | 0.5 | ○ | 1.2 | ○ | 1.9 | |
| 20 | ○ | 1.9 | ○ | 0.2 | ○ | 1.2 | ○ | 1.9 | |
| 21 | ○ | 1.7 | ○ | 0.9 | ○ | 1.1 | ○ | 1.8 | |
| 22 | ○ | 1.7 | ○ | 0.8 | ○ | 1.1 | ○ | 1.8 | Ex.22 |
| 23 | ○ | 1.7 | ○ | 0.5 | ○ | 1.1 | ○ | 1.8 | |
| 24 | ○ | 1.7 | ○ | 0.2 | ○ | 1.1 | ○ | 1.8 | |
| 25 | ○ | 1.9 | ○ | 0.9 | ○ | 1.2 | ○ | 1.9 | |
| 26 | ○ | 1.9 | ○ | 0.8 | ○ | 1.2 | ○ | 1.9 | |
| 27 | ○ | 1.9 | ○ | 0.5 | ○ | 1.2 | ○ | 1.9 | |
| 28 | ○ | 1.9 | ○ | 0.2 | ○ | 1.2 | ○ | 1.9 | |
| 29 | ○ | 1.7 | ○ | 0.9 | ○ | 1.1 | ○ | 1.8 | |
| 30 | ○ | 1.7 | ○ | 0.8 | ○ | 1.1 | ○ | 1.8 | |
| 31 | ○ | 1.7 | ○ | 0.5 | ○ | 1.1 | ○ | 1.8 | |
| 32 | ○ | 1.7 | ○ | 0.2 | ○ | 1.1 | ○ | 1.8 | |
| C.Ex. 7 | ○ | 1.8 | Δ | 0.05 | ○ | 1.2 | Δ | 1.8 | |
| 8 | ○ | 1.8 | Δ | 0.03 | ○ | 1.2 | Δ | 1.8 | |
| 9 | ○ | 1.6 | Δ | 0.02 | ○ | 1 | × | 1.5 | C.Ex.9 |
| 10 | ○ | 1.6 | Δ | 0.02 | ○ | 1 | × | 1.5 | |
| 11 | ○ | 2.1 | ○ | 0.8 | ○ | 1.3 | ○ | 2 | |
| 12 | ○ | 2.1 | ○ | 0.8 | ○ | 1.3 | ○ | 2 | |

[Table 7]

**Table 7: Results for evaluation of adhesiveness (Sn= 1.4, 2.8g/m²; Laminate temperature: 250°C)**

| | appearance after lamination | results for evaluation of adhesiveness | | | | | | | note |
|---|---|---|---|---|---|---|---|---|---|
| | | flat substrate (lamination plate) S peel strength | 1^{st} cup | | B/M can | | CHS can | | |
| | | | delamination | S peel strength | delamination | S peel strength | delamination | S peel strength | |
| Ex.33 | ○ | 2 | ○ | 1 | ○ | 1.3 | ○ | 1.9 | |
| 34 | ○ | 2 | ○ | 0.9 | ○ | 1.3 | ○ | 1.9 | |
| 35 | ○ | 2 | ○ | 0.5 | ○ | 1.3 | ○ | 1.9 | |
| 36 | ○ | 2 | ○ | 0.2 | ○ | 1.3 | ○ | 1.9 | |
| 37 | ○ | 1.8 | ○ | 1 | ○ | 1.2 | ○ | 1.8 | |
| 38 | ○ | 1.8 | ○ | 0.9 | ○ | 1.2 | ○ | 1.8 | Ex.38 |
| 39 | ○ | 1.8 | ○ | 0.5 | ○ | 1.2 | ○ | 1.8 | |
| 40 | ○ | 1.8 | ○ | 0.2 | ○ | 1.2 | ○ | 1.8 | |
| 41 | ○ | 2 | ○ | 1 | ○ | 1.2 | ○ | 1.9 | |
| 42 | ○ | 2 | ○ | 0.9 | ○ | 1.3 | ○ | 1.9 | |
| 43 | ○ | 2 | ○ | 0.5 | ○ | 1.3 | ○ | 1.9 | |
| 44 | ○ | 2 | ○ | 0.2 | ○ | 1.3 | ○ | 1.9 | |
| 45 | ○ | 1.8 | ○ | 1 | ○ | 1.2 | ○ | 1.8 | |
| 46 | ○ | 1.8 | ○ | 0.9 | ○ | 1.2 | ○ | 1.8 | |
| 47 | ○ | 1.8 | ○ | 0.5 | ○ | 1.2 | ○ | 1.8 | |
| 48 | ○ | 1.8 | ○ | 0.2 | ○ | 1.2 | ○ | 1.8 | |
| C.Ex. 13 | ○ | 1.9 | Δ | 0.05 | ○ | 1.2 | Δ | 1.8 | |
| 14 | ○ | 1.9 | Δ | 0.03 | ○ | 1.2 | Δ | 1.8 | |
| 15 | ○ | 1.7 | Δ | 0.02 | ○ | 1.1 | × | 1.5 | C.Ex.15 |
| 16 | ○ | 1.7 | Δ | 0.02 | ○ | 1.1 | × | 1.5 | |
| 17 | ○ | 2.2 | ○ | 0.76 | ○ | 1.5 | ○ | 2 | |
| 18 | ○ | 2.2 | ○ | 0.7 | ○ | 1.5 | ○ | 2 | |

[Table 8]

**Table 8: Results for evaluation of adhesiveness (Sn= 0.5, 13g/m²; Laminate temperature: 220°C)**

| | results for evaluation of adhesiveness | | | | | | | note |
|---|---|---|---|---|---|---|---|---|
| | flat substrate (lamination plate) S peel strength | 1^{st} cup | | B/M can | | CHS can | | |
| | | delamination | S peel strength | delamination | S peel strength | delamination | S peel strength | |
| Ex.49 | 1.9 | ○ | 1 | ○ | 1.5 | ○ | 1.9 | |
| 50 | 1.9 | ○ | 0.9 | ○ | 1.5 | ○ | 1.9 | |
| 51 | 1.9 | ○ | 0.7 | ○ | 1.4 | ○ | 1.9 | |
| 52 | 1.9 | ○ | 0.3 | ○ | 1.4 | ○ | 1.9 | |
| 53 | 1.7 | ○ | 0.7 | ○ | 1 | ○ | 1.8 | |
| 54 | 1.7 | ○ | 0.5 | ○ | 1 | ○ | 1.8 | |
| 55 | 1.7 | ○ | 0.4 | ○ | 0.9 | ○ | 1.8 | |
| 56 | 1.7 | ○ | 0.2 | ○ | 0.9 | ○ | 1.8 | |
| 57 | 1.9 | ○ | 1 | ○ | 1.5 | ○ | 1.9 | |
| 58 | 1.9 | ○ | 0.9 | ○ | 1.5 | ○ | 1.9 | |
| 59 | 1.9 | ○ | 0.7 | ○ | 1.4 | ○ | 1.9 | |
| 60 | 1.9 | ○ | 0.3 | ○ | 1.4 | ○ | 1.9 | |
| 61 | 1.7 | ○ | 0.7 | ○ | 1 | ○ | 1.8 | |
| 62 | 1.7 | ○ | 0.5 | ○ | 1 | ○ | 1.8 | |
| 63 | 1.7 | ○ | 0.4 | ○ | 0.9 | ○ | 1.8 | |
| 64 | 1.7 | ○ | 0.2 | ○ | 0.9 | ○ | 1.8 | |
| C.Ex. 19 | 1.8 | Δ | 0.05 | ○ | 1.2 | Δ | 1.8 | |
| 20 | 1.8 | Δ | 0.03 | ○ | 1.2 | Δ | 1.8 | |
| 21 | 1.6 | × | 0.01 | ○ | 0.8 | × | 1.5 | |
| 22 | 1.6 | × | 0.01 | ○ | 0.8 | × | 1.5 | |
| 23 | 2.1 | ○ | 0.8 | ○ | 1.3 | ○ | 2 | |
| 24 | 2.1 | ○ | 0.8 | ○ | 1.3 | ○ | 2 | |

In Examples 1-64, as the 1st cup shows 0.2kg/15mm or more of S peel strength, it supports the superiority of working adhesive properties of the resin film during the can forming process. Furthermore, the cup edge delamination is not found in the 1st cup, B/M can and CHS can.

On the other hand, in Comparative Examples 1- 4, 7- 10 and 13-16, in the forming of 1st cup, defection of adhesive property occurs between the resin film and the surface-treated steel sheet at the cup edge. And the delamination is found at the cup edge.

In the present invention, the reason for the improvement of the adhesiveness can be inferred as follows:

As the evaluation under the condition of the surface-treated steel sheet, for instance, in comparison with Example 22 and Comparative Example 9, while the amount of tin plating (Sn)=2.8 g/m²), and the heating temperature of the surface-treated steel sheet during lamination (laminate temperature= 220°C) are the same (refer to Table 2), the S peel strength of the 1st cup accounts 40 times of significant difference is found (refer to Table 5).

And also, in comparing the appearance of the surface treated steel sheet after the tin plating in Figure 1 with the corresponding one in Figure 2, the difference in the form of tin's electrocoat is found. In the surface-treat steel sheet of Example 22, in the surface of which the particulate metal tin is composed, the area ratio of tin on the surface layer is 50%, the average size of the tin particles is 5µm, and the tin particles are large and many irregularities are found on the surface. On the other hand, in the normal tinplate of Comparative Example 9, the area ratio of tin on the surface layer is 100%, the average size of the tin particle is 0.3µm, and not many irregularities are found the surface. The same results are found in other Examples and Comparative Examples.

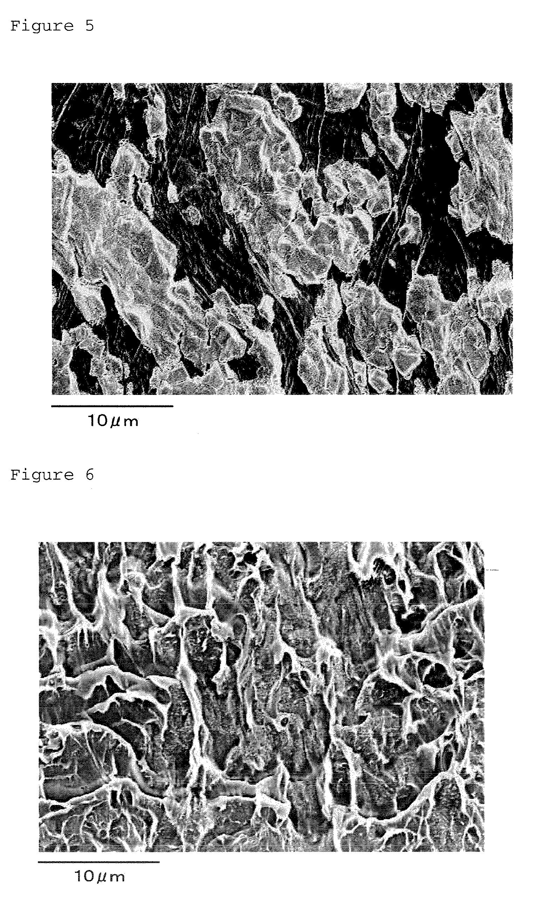

Also, as for the evaluation of the adhesiveness under the condition of the 1st cup, the can walls of the 1st cup (the surface after the S peel strength test of surface-treated steel sheet) that have large difference in the adhesiveness (S peel strength) of the resin film is observed, for instance between Example 22 and Comparative Example 9. In the surface of the surface-treated steel sheet, where the particulate tin plating is conducted, it is observed that the trace of the resin film that adhered to the concave portion of plating (where there is no electrocoat of tin and the iron surface is exposed) is in the form of shrink (refer to Figure 5).

Furthermore, when the separated surface of the resin film side is observed, the resin film with cohesion failure is found, which indicates that the adhesiveness is high (refer to Figure 6).

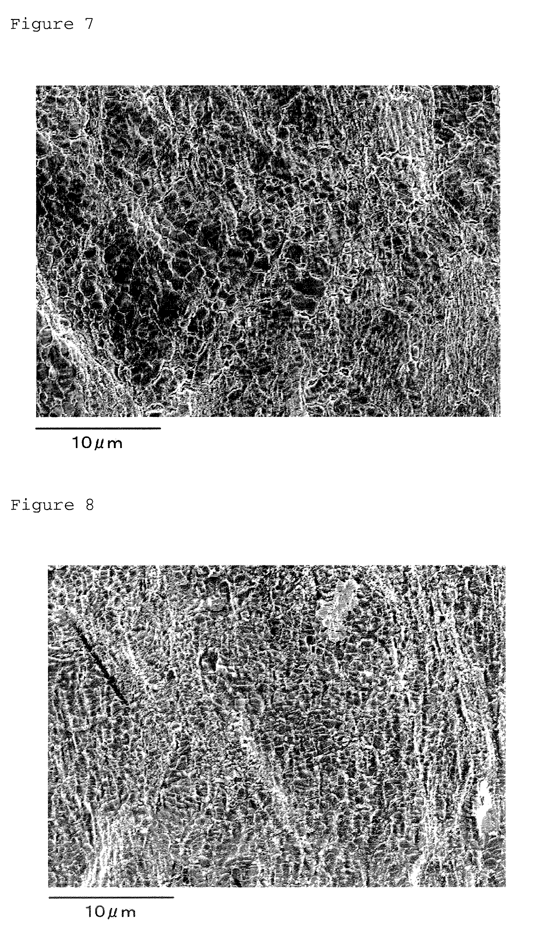

On the other hand, when the separated surface of the conventionally normal tinplate is observed, there could not be seen difference between the surface-treated steel sheet side (refer to Figure 7) and the resin film side (refer to Figure 8), and both of them are considered to be a boundary separation with low adhesiveness.

In addition, the same tendencies are found for the comparing with other Examples, Comparative Examples (for instance, in case of the amount of tin plating is 1.4g/m²), or test portions conducted with the tin melting treatment.

Next, the Examples in case of having a high heating temperature (laminate temperature) in laminating the surface-treated steel sheet are analyzed. For instance, in Example 38 and Comparative Example 15, the amount of tin plating is 1.4g/m², and the laminate temperature is 250°C. Although under the same condition the resin film was laminated in both cases, there is a difference in the appearance of the resin film after lamination: the appearance looks good in Example 38 where the particulate metal tin is composed. On the other hand, however, in Comparative Example 15, the appearance is uneven, and there is seen melting irregularity of tin in being observed from the resin film side. And also in terms of the adhesiveness of the resin films for each B/M can and CHS can, the Examples tended to show much more superior results.

As it is explained above, the resin-coated surface-treated steel sheet in the present invention does not cause separations of the resin film during can forming process of drawing, drawing followed by further stretching, drawing followed by further ironing and stable. Further, during severer can forming process of drawing followed by a combination of stretching and ironing, it shows stable and excellent process adhesiveness without having the resin film separated.

Conventionally, as a method of evaluation of the adhesiveness of the coating resin, T peel strength is measured under the condition with the flat board before forming. In the present invention, S peel strength is adopted as separation strength as conventional method is considered that it does not necessarily reflect the process adhesiveness precisely. That is, S peel strength was adopted as the evaluation method to precisely reflect the adhesiveness during and after forming process (working adhesive properties) in case of severe forming process such as a drawing followed by a combination of stretching and ironing. S peel strength relates to a method for the evaluation of the working adhesive strength by measuring the separation strength of the coating resin of test piece that is acquired by drawing the resin-coated surface-treated steel sheet to form a cup, and by cutting out from the cup side wall.

The detailed method for the measurement of S peel strength is shown in the following.

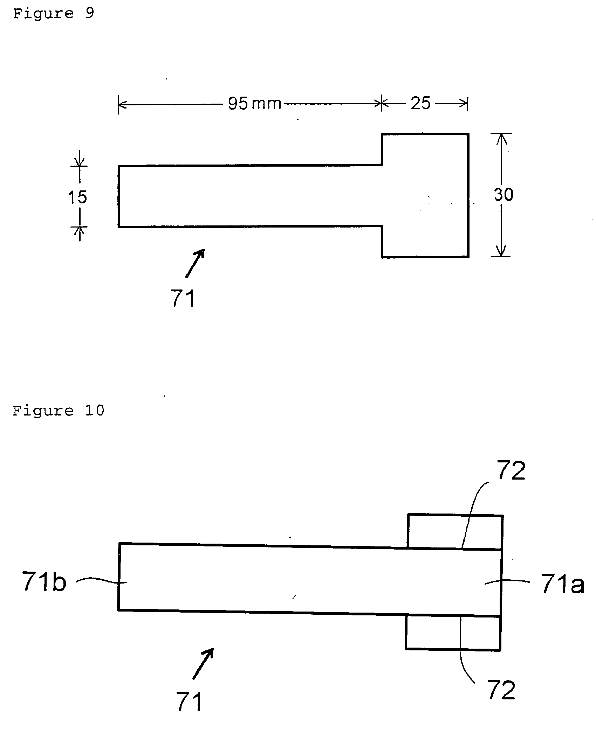

First of all, a drawn cup with diameter of 96mm and height of 42mm is formed by punching a blank with a diameter 154mm out of the resin-coated surface-treated steel sheet, and by conducting a first step drawing at the drawing ratio of 1.64. From this cup, its sidewall is punched out with the size of 30mm in the direction of cup height and 120mm in the direction of cup round, and it is re-bent in the form of flat board. Then test pieces 71 in the shape of letter T is punched by using a press mold with the sizes shown in the horizontal projection in Figure 9.

In addition, as shown in Figure 10, splits 72 are applied by using a cutting knife to the coating resin, until splits 72 reach to the surface-treated steel sheet, at the side for measurement of adhesiveness strength (the front side in the figure), which is shown in the edge 71a of one side (right side) of the test piece 71.

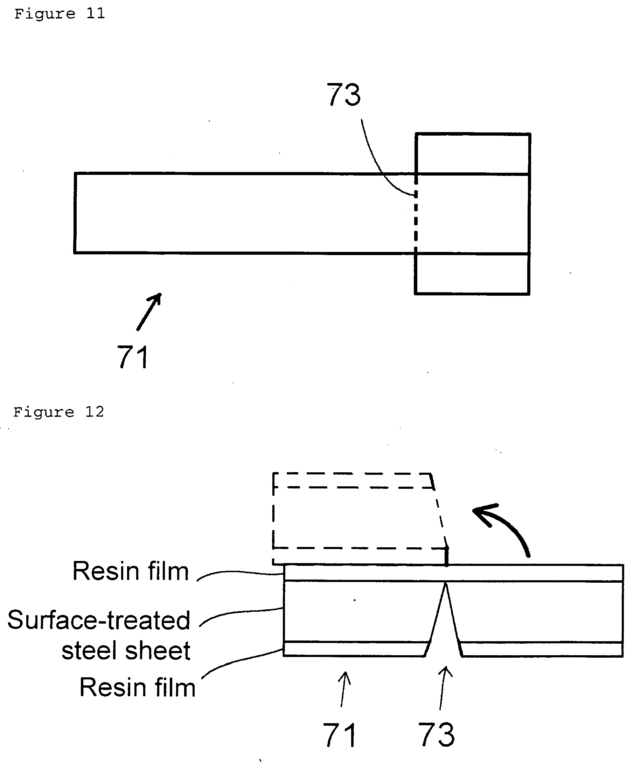

Furthermore, as shown in Figure 11 and 12, by using the die set for score forming, score 73 is applied on the opposite side the back side in the figure to the side (the one with the splits 72) for measurement of adhesiveness strength. Then the score part is folded and only the surface-treated steel sheet is cut. At which time, at the side for measurement of adhesiveness strength, the coating resin, without being cut, remains to be connected to the both sides of the surface-treated steel sheet that was cut and separated.

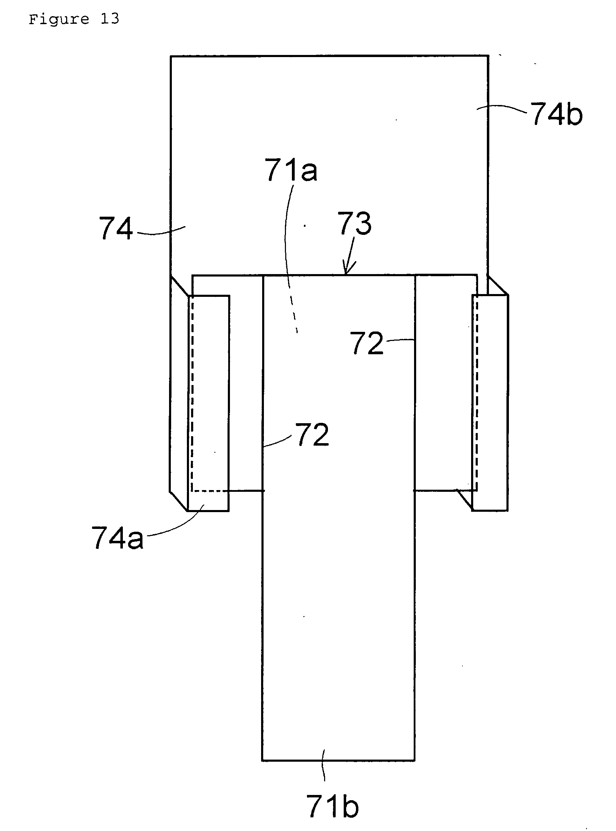

Next, as shown in Figure 13, the edge piece 71a is inserted into the test piece insertion part 74a of the test piece holder 74 so that the test piece 71 is fixed to the test piece holder 74. Then the upper part 74b of the test piece holder 74 and the other edge part 71b of the test piece 71 are strained being sandwiched by the both chuck parts of the tensile tester. The tensile strength is measured by compulsively separating the coating resin from the surface-treated steel sheet to acquire the values of S peel strength.

With respect to the S peel strength measured the way explained above, it is preferable to be 0.2kg/15mm or more in the test piece of 15mm wideness. If S peel strength is smaller than 0.2kg/15mm, a stable and excellent working adhesive properties cannot be expected during a severe forming process such as a drawing followed by a combination of stretching and ironing for manufacturing formed cans.

### Industrial applicability

The resin-coated surface-treated steel sheet in the present invention improves the adhesiveness of the conventional resin-coated steel sheet so as to enhance excellent corrosion resistance without deteriorating the workability.

At the same time, the present invention enables continuous manufacturing by an easy method, and stable providing a resin-coated steel sheet that has excellent properties. Therefore, the present invention is considered to be industrially quite valuable.

### BRIEF DESCRIPTION OF THE DRAWINGS

[Figure 1] Photograph of surface observation (SEM image) of the surface-treated steel sheet in the present invention, on which the particulate metal tin is deposited.
[Figure 2] Photograph of surface observation (SEM image) of the normal tinplate.
[Figure 3] Photograph of surface observation (SEM image) of the surface-treated steel sheet, in which the surface-treated steel sheet of Figure 1 is heated at higher than 232°C and the melting treatment of tin plating is conducted.
[Figure 4] Photograph of surface observation (SEM image) after the melting treatment of the normal tinplate.
[Figure 5] Photograph of surface observation (SEM image) showing the 1st cup can wall (the surface of the surface-treated steel sheet after the S peel strength test).
[Figure 6] Photograph of surface observation (SEM image) showing the 1st cup can wall (the surface of the resin-film side after the S peel strength test).
[Figure 7] Photograph of surface observation (SEM image) showing the surface boundary on the surface-treated steel sheet side of the conventionally normal tinplate.
[Figure 8] Photograph of surface observation (SEM image) showing the surface boundary on resin film side of the conventionally normal tinplate.
[Figure 9] Horizontal projection showing the shape of the test piece for the S peel strength measurement.
[Figure 10] Horizontal projection showing the condition when splits are applied on the coating resin film side of the test piece for the S peel strength measurement.
[Figure 11] Horizontal projection showing the condition when score is applied to the test piece for the S peel strength measurement.
[Figure 12] Cross-sectional drawing of the test piece for the S peel strength measurement showing the shape of the part where the score is applied.
[Figure 13] Brief diagrammatic perspective view showing the condition when the strength measurement is conducted by inserting the test piece for the S peel strength measurement into the test piece holder.

### EXPLANATION OF REFERENCE LETTERS

- 71:: Test piece
- 71a:: One edge of the test piece
- 71b:: The other edge of the test piece
- 72:: Split
- 73:: Score
- 74:: Test piece holder
- 74a:: Test piece insertion part
- 74b:: Test piece hold upper part

## Claims

1. A surface-treated steel sheet on which tin is discontinuously deposited in the form of particles and iron of the steel sheet surface is partially exposed,
**characterized in that**
an area ratio of the tin on the steel sheet surface is 5-95%, an amount of the tin is 0.1-13 g/m², and
an average particle size of the particulate metal tin is 0.5-50µm wherein a resin layer is to be laminated on the surface-treated steel sheet.

2. A method of manufacturing the surface-treated steel sheet of Claim 1, on which tin is deposited in the form of particles,
**characterized in that**
depositing particulate metal tin by using tin sulfate plating bath.

3. The method of manufacturing the surface-treated steel sheet according to claim 2, further conducting tin melting treatment after the depositing of the particulate metal tin.

4. A resin-coated steel sheet, **characterized in that** a resin layer is laminated on the surface-treated steel sheet of Claim 1 so that the exposed iron adheres to the resin layer.

## Patentansprüche

1. Ein oberflächenbehandeltes Stahlblech auf dem diskontinuierlich Zinn in Partikelform abgeschieden wird und das Eisen der Stahlblechoberfläche teilweise freiliegt,
**dadurch gekennzeichnet, dass**
ein Flächenverhältnis des Zinns auf der Stahlblechoberfläche 5-95 % beträgt,
eine Menge des Zinns 0,1 - 13 g/m² beträgt, und
eine mittlere Teilchengröße des partikelförmigen metallischen Zinns 0,5-50 µm beträgt, wobei eine Harzschicht auf das oberflächenbehandelte Stahlblech laminiert wird.

2. Ein Verfahren zur Herstellung des oberflächenbehandelten Stahlblechs nach Anspruch 1, auf dem Zinn in Partikelform abgelagert wird,
**dadurch gekennzeichnet, dass**
das partikelförmige metallische Zinn durch Verwendung einer Zinnsulfat-Elektrolytflüssigkeit aufgebracht wird.

3. Das Verfahren zur Herstellung des oberflächenbehandelten Stahlblechs nach Anspruch 2, wobei weiter eine Zinnschmelzbehandlung nach dem Abscheiden des partikelförmigen metallischen Zinns durchgeführt wird.

4. Ein harzbeschichtetes Stahlblech, **dadurch gekennzeichnet, dass** eine Harzschicht auf das oberflächenbehandelte Stahlblech nach Anspruch 1 laminiert wird, so dass das freiliegende Eisen an der Harzschicht anhaftet.

## Revendications

1. Tôle d'acier traitée en surface sur laquelle de l'étain est déposé de manière discontinue sous la forme de particules et le fer de la surface de la tôle d'acier est partiellement exposé,
**caractérisée en ce que**
un rapport en surface de l'étain sur la surface de la tôle d'acier est de 5 à 95 %, une quantité d'étain est de 0,1 à 13 g/m², et
une taille moyenne des particules de l'étain métallique particulaire est de 0,5 à 50 µm,
où une couche de résine est destinée à être stratifiée sur la tôle d'acier traitée en surface.

2. Méthode de fabrication de la tôle d'acier traitée en surface selon la revendication 1 sur laquelle l'étain est déposé sous la forme de particules,
**caractérisée en ce que**
le dépôt de l'étain métallique particulaire s'effectue à l'aide d'un bain de placage de sulfate d'étain.

3. Méthode de fabrication de la tôle d'acier traitée en surface selon la revendication 2, comprenant en outre la réalisation d'un traitement de fusion de l'étain après dépôt de l'étain métallique particulaire.

4. Tôle d'acier revêtue de résine, **caractérisée en ce qu'**une couche de résine est stratifiée sur la tôle d'acier traitée en surface selon la revendication 1, de façon que le fer exposé adhère à la couche de résine.
